# EUROPÄISCHE PATENTSCHRIFT

(11) **EP 3 661 834 B1**
(45) Veröffentlichungstag und Bekanntmachung des Hinweises auf die Patenterteilung: **19.05.2021**
(21) Anmeldenummer: 18750398.2
(22) Anmeldetag: 01.08.2018
(51) Int. Cl.: B62D 6/10, G01L 3/10, F16D 66/00

(54) **VERFAHREN ZUR MONTAGE EINER INTEGRALEN BAUEINHEIT IN EINER ELEKTROMECHANISCHEN KRAFTFAHRZEUGLENKUNG MIT EINER DREHMOMENTSENSOREINHEIT UND EINER LENKWINKELSENSOREINHEIT MITTELS ULTRASCHALLSCHWEISSEN**
METHOD FOR MOUNTING OF AN INTEGRAL STRUCTURAL UNIT IN AN ELECTROMECHANICAL MOTOR VEHICLE STEERING SYSTEM HAVING A TORQUE SENSOR UNIT AND A STEERING ANGLE SENSOR UNIT BY MEANS OF ULTRASONIC WELDING
PROCÉDÉ DE MONTAGE PAR SOUDAGE PAR ULTRASONS D'UNE UNITÉ STRUCTURALE INTÉGRÉE DANS LA DIRECTION ÉLECTROMÉCANIQUE D'UN VÉHICULE À MOTEUR, LADITE UNITÉ STRUCTURALE COMPORTANT UNE UNITÉ DE DÉTECTION DE COUPLE ET UNE UNITÉ DE DÉTECTION D'ANGLE DE BRAQUAGE

(30) Priorität: 04.08.2017 DE 102017117716
(43) Veröffentlichungstag der Anmeldung: 10.06.2020
(73) Patentinhaber: thyssenkrupp Presta AG, 9492 Eschen (LI); thyssenkrupp AG, 45143 Essen (DE)
(72) Erfinder: KNOLL, Peter, 88131 Lindau (DE); KNECHT, Manuel, 88285 Bodnegg (DE)
(74) Vertreter: thyssenkrupp Intellectual Property GmbH
(86) Internationale Anmeldenummer: PCT/EP2018/070827
(87) Internationale Veröffentlichungsnummer: WO 2019/025476

(56) Entgegenhaltungen:
- EP-A2- 1 918 175
- EP-A2- 2 594 915
- DE-A1-102015 013 965
- KR-A- 20140 145 492

## Beschreibung

Die vorliegende Erfindung betrifft eine elektromechanische Hilfskraftlenkung für ein Kraftfahrzeug mit den Merkmalen des Oberbegriffs des Anspruchs 1 und ein Verfahren zur Montage einer integralen Baueinheit in einer elektromechanischen Kraftfahrzeuglenkung mit den Merkmalen des Oberbegriffs des Anspruchs 10.

Elektromechanische Kraftfahrzeugservolenkungen weisen Servoeinheiten auf, die als Hilfskraftunterstützungseinrichtung an einem Ritzel oder einer Zahnstange des Lenkgetriebes angeordnet sein können. Üblicherweise sind in Kraftfahrzeugen die Lenkwellen in eine obere Lenkwelle, die mit einem Steuerrad oder Lenkrad verbunden ist, und eine untere Lenkwelle, die mit dem Lenkgetriebe zur Verschwenkung der Räder verbunden ist, geteilt. Die obere und untere Lenkwelle sind dabei mit einem Drehstab drehelastisch miteinander verbunden. Die Verdrehung der oberen Lenkwelle gegenüber der unteren Lenkwelle wird genutzt, um das von einem Fahrer in das Lenksystem eingebrachte Drehmoment zu messen, das zur Bestimmung der Lenkunterstützung benötigt wird.

Das Erfassen eines Relativmoments zwischen der oberen Lenkwelle und der unteren Lenkwelle erfolgt mittels Drehmomentsensor.

Aus der Offenlegungsschrift DE 10 2011 101 482 A1 ist eine Sensoranordnung bekannt, die einen auf einer drehbaren Welle befestigten Geber mit einem Geberelement aufweist, wobei das Geberelement mit einer für ein zugeordnetes Sensorelement lesbaren Kodierung versehen ist und von einer Trägerhülse getragen wird. Die Trägerhülse ist aus einem thermoplastischen Kunststoff gefertigt, der mittels Ultraschallumformung in eine Ausnehmung der Welle eingeformt ist. Das Ultraschallschweißverfahren hat jedoch Nachteile bezüglich der Festigkeit der Schweißnähte, insbesondere weil nur geringe Presskräfte während der Verschweißung darstellbar sind.

Ein Drehmomentsensor ist beispielsweise aus dem Dokument DE 10 2007 043 502 A1 bekannt. Die Drehmomentsensoreinrichtung ist dabei an zwei sich in axialer Richtung gegenüberliegenden Wellenteilen bzw. der oberen Lenkwelle und der unteren Lenkwelle der Lenkwelle angebracht, welche über einen Torsionsstab miteinander verbunden sind. An der oberen Lenkwelle ist ein Magnet - etwa ein Ringmagnet - angeordnet, während auf der unteren Lenkwelle ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter geleitet, welche dann den magnetischen Fluss an einen Magnetsensor - beispielsweise einen Hall-Sensor - abgeben. Der Magnetsensor befindet sich dabei zwischen den beiden Flussleitern

Patentanmeldung DE102015013965A1 offenbart eine Kraftfahrzeuglenkung nach dem Oberbegriff des Anspruchs 1 und ein Montageverfahren nach dem Oberbegriff des Anspruchs 10.

Herkömmlicherweise wird der Magnet durch Aufpressen einer durch Spritzguss in einen Magnethalter integrierten Hülse auf einen Lagersitz der oberen Lenkwelle befestigt. Der damit einhergehende Pressverband und die Kerbverzahnung sind allerdings problematisch, da die benötigten geringen Toleranzen der Kerbverzahnung im Spritzgussverfahren schwer zu erreichen sind und die Konstruktion zudem anfällig auf Risse ist. Zudem sind die Herstellung der Hülse und das Aufpressverfahren mit hohen Kosten verbunden.

Es ist deshalb Aufgabe der vorliegenden Erfindung, eine technische Lösung für eine Verbindung eines Ringmagnetes oder Statorhalters eines Drehmomentsensors mit einer Welle vorzuschlagen, die die Herstellung vereinfacht und bei der hohe Spannungen oder Risse an den Komponenten verhindert werden können.

Diese Aufgabe wird von einer elektromechanischen Hilfskraftlenkung für ein Kraftfahrzeug mit den Merkmalen des Anspruchs 1 und von einem Verfahren mit den Merkmalen des Anspruchs 9 gelöst.

Demnach wird für eine Elektromechanische Hilfskraftlenkung für ein Kraftfahrzeug, umfassend
- eine Lenkwelle die drehbar um eine Lenkwellendrehachse gelagert ist und die eine obere Lenkwelle und eine untere Lenkwelle aufweist, die über einen Drehstab miteinander verbunden sind,
- eine integrale Baueinheit, umfassend eine Sensoreinheit, die eine Drehmomentsensoreinheit, die die Verdrehung der oberen Lenkwelle gegenüber der unteren Lenkwelle erfasst, und/oder eine Lenkwinkelsensoreinheit, die den absoluten Lenkwinkel der unteren Lenkwelle oder der oberen Lenkwelle mit einem Stirnradgetriebe misst, umfasst,
wobei die Sensoreinheit einen drehfest mit der oberen Lenkwelle oder unteren Lenkwelle verbunden Ringmagneten aufweist, und wobei ein Magnetischer Sensor die Verdrehung der mit dem Ringmagneten verbundenen Lenkwelle detektiert, und wobei der Ringmagnet von einem Teil in Form einer Ringmagnethülse oder einem Statorhalter getragen ist, wobei das Teil auf der oberen Lenkwelle oder der unteren Lenkwelle angeordnet ist,
vorgeschlagen, dass die Ringmagnethülse und/oder der Statorhalter aus einem thermoplastischen Kunststoff gefertigt und in einem Bereich zur Montage an der Lenkwelle mittels Ultraschallumformung in die Lenkwelle eingeformt ist.

Bevorzugt handelt es sich um eine elektromechanische Hilfskraftlenkung für ein Kraftfahrzeug, umfassend eine Lenkwelle die drehbar um eine Lenkwellendrehachse gelagert ist und die eine obere Lenkwelle und eine untere Lenkwelle aufweist, die über einen Drehstab miteinander verbunden sind, eine integrale Baueinheit mit einer Drehmomentsensoreinheit, die die Verdrehung der oberen Lenkwelle gegenüber der unteren Lenkwelle erfasst, und mit einer Lenkwinkelsensoreinheit, die den absoluten Lenkwinkel der unteren und/oder der oberen Lenkwelle mit einem Stirnradgetriebe misst, wobei die Drehmomentsensoreinheit einen drehfest mit der oberen oder unteren Lenkwelle verbundenen Ringmagneten und einen mit der unteren oder oberen Lenkwelle verbundenen Magnetflussleiter aufweist, und wobei ein Magnetsensor die Verdrehung der mit dem Ringmagneten verbunden oberen oder unteren Lenkwelle gegenüber der mit dem Magnetflussleiter verbundenen unteren oder oberen Lenkwelle detektiert, und wobei das Stirnradgetriebe ein erstes Zahnrad umfasst, welches mit einem Statorhalter verbunden ist, und wobei der Ringmagnet von einer Ringmagnethülse getragen ist, die auf der oberen oder unteren Lenkwelle angeordnet ist, und die Ringmagnethülse und/oder der Statorhalter aus einem thermoplastischen Kunststoff gefertigt und in einem Bereich zur Montage an der oberen oder unteren Lenkwelle mittels Ultraschallumformung in die obere oder untere Lenkwelle eingeformt ist.

Anstatt wie herkömmlicherweise notwendig die umspritzte Ringmagnethülse auf die Lenkwelle zu verpressen, wird diese direkt mit der Hülse durch Ultraschalleinsenken verbunden. Durch das Ultraschallschweißen können hohe Spannungen in dem Kupplungsteil durch Formschluss vermieden werden. Es ist denkbar und möglich, dass der Ringmagnet einstückig oder dass der Ringmagnet durch die Ringmagnethülse gebildet ist.

Bevorzugt weist die obere Lenkwelle und/oder die untere Lenkwelle eine Rändelung in einem Befestigungsbereich mit der Ringmagnethülse und/oder des Statorhalters auf. Es ist denkbar und möglich, dass die Ringmagnethülse oder eine Innenfläche des Statorhalters eine Rändelung oder Verzahnungsstruktur aufweist. Durch eine Rändelung sowohl auf der Ringmagnethülse als auch im Befestigungsbereich der oberen und/oder unteren Lenkwelle oder durch eine Rändelung sowohl auf der Innenfläche des Statorhalters als auch im Befestigungsbereich der oberen und/oder unteren Lenkwelle kann ein zuverlässiger Formschluss der Verbindung zwischen dem Kunststoffbauteil und dem Metallelement sichergestellt werden.

Die Rändelung ist beispielsweise als Kreuzrändelung oder Längsrändelung, als Geradrändelung oder als Querrändelung oder als Schrägrändelung ausgeführt.

Es ist vorteilhaft, wenn die Ringmagnethülse an einer Stirnseite Vorsprünge aufweist, die zur Befestigung eines Werkzeuges vorgesehen sind, das die Ringmagnethülse fixiert, um ein Wegrutschen unter Schalleinwirkung zu vermeiden.Vorzugsweise umgibt oder umschließt der Magnetflussleiter die Ringmagnethülse.

In einer vorteilhaften Ausführungsform umfasst das Stirnradgetriebe ein erstes Zahnrad, dass den Ringmagnet mit einer nach außen gerichteten ersten Verzahnung umfangseitig umgibt und ein zweites Zahnrad, das um eine zweite Zahnradachse drehbar gelagert ist, mit einer um die zweite Zahnradachse umlaufenden nach außen gerichteten zweiten Verzahnung, wobei die zweite Zahnradachse parallel und beabstandet zur Lenkwellendrehachse angeordnet ist und die erste Verzahnung und die zweite Verzahnung in Eingriff miteinander stehen.

Vorzugsweise ist das erste Zahnrad mit der nach aussen gerichteten ersten Verzahnung einstückig mit dem Statorhalter ausgebildet. Dadurch können Bauteile eingespart werden und damit Kosten reduziert werden.

Weiter ist es zu bevorzugen, wenn ein drittes Zahnrad vorgesehen ist, das um eine dritte Zahnradachse drehbar gelagert ist, mit einer nach außen gerichteten, um die dritte Zahnradachse umlaufenden dritten Verzahnung, wobei die dritte Zahnradachse parallel und beabstandet zur Lenkwellendrehachse und parallel beabstandet zur zweiten Zahnradachse angeordnet ist.

Zur einfachen magnetischen Abtastung des Drehwinkels ist bevorzugt ein magnetisches Substrat vorgesehen ist, das mit dem dritten Zahnrad drehfest verbunden ist oder integral das dritte Zahnrad bildet, wobei dessen Drehlage durch ein Sensorelement abtastbar ist. Durch die Kombination der Zahnräder miteinander wird eine Getriebe-Übersetzung dargestellt, so dass im bevorzugten Fall das magnetische Substrat oder einfach der Magnet sich langsamer dreht als die Drehung der abzutastenden Lenkwellendrehung. Insbesondere wird das Substrat oder der Magnet nur maximal einmal um 360° verdreht, obwohl die Lenkwelle mehrere Umdrehungen, beispielsweise vier Umdrehungen ausführt.

Zur Darstellung der Getriebe-Übersetzung, insbesondere der Untersetzung in eine langsamere Umdrehung, ist mit Vorzug das dritte Zahnrad im zweiten Zahnrad teilweise aufgenommen und drehbar um die dritte Zahnradachse gelagert.

Zur einfachen Darstellung eines exzentrischen Getriebes kann ein viertes Zahnrad vorgesehen sein, dass eine nach innen gerichtete, um die zweite Zahnradachse und dritte Zahnradachse umlaufende vierte Verzahnung aufweist, die mit der dritten Verzahnung in Eingriff steht.

Insbesondere ist die vierte Verzahnung mit Vorteil in ihrer Drehlage in Bezug auf die Lenkwellenachse und die zweite Zahnradachse und die dritte Zahnradachse ruhend und unverschieblich angeordnet.

Weiterhin ist ein Verfahren zur Montage einer integralen Baueinheit in einer elektromechanischen Hilfskraftlenkung für ein Kraftfahrzeug, umfassend
- eine Lenkwelle die drehbar um eine Lenkwellendrehachse gelagert ist und die eine obere Lenkwelle und eine untere Lenkwelle aufweist, die über einen Drehstab miteinander verbunden sind,
- wobei die integrale Baueinheit, eine Sensoreinheit, die eine Drehmomentsensoreinheit, die die Verdrehung der oberen Lenkwelle gegenüber der unteren Lenkwelle erfasst, und/oder eine Lenkwinkelsensoreinheit, die den absoluten Lenkwinkel der unteren Lenkwelle oder der oberen Lenkwelle mit einem Stirnradgetriebe misst, umfasst,
wobei die Sensoreinheit einen drehfest mit der oberen Lenkwelle (3) oder der unteren Lenkwelle verbunden Ringmagneten aufweist, und wobei ein magnetischer Sensor die Verdrehung der mit dem Ringmagneten verbundenen Lenkwelle detektiert, und wobei der Ringmagnet von einem Teil in Form einer Ringmagnethülse oder einem Statorhalter getragen ist, wobei das Teil auf der oberen Lenkwelle oder der unteren Lenkwelle angeordnet ist, vorgeschlagen, gekennzeichnet durch folgende Schritte:
- Bereitstellen der Ringmagnethülse und/oder des Statorhalters aus einem thermoplastischen Kunststoff,
- Positionieren der Ringmagnethülse und/oder des Statorhalters auf der oberen Lenkwelle oder der unteren Lenkwelle mit einem definierten Anpressdruck,
- Einleiten einer hochfrequenten mechanischen Schwingung im Ultraschallbereich in die entsprechende Lenkwelle,
- Einpressen der entsprechenden Lenkwelle in die Ringmagnethülse und/oder dem Statorhalter mit einem definierten Anpressdruck.

Weiterhin ist ein Verfahren zur Montage einer integralen Baueinheit in einer elektromechanischen Kraftfahrzeuglenkung mit einer Drehmomentsensoreinheit, die die Verdrehung einer oberen Lenkwelle gegenüber einer unteren Lenkwelle erfasst, und einer Lenkwinkelsensoreinheit, die einen absoluten Lenkwinkel der unteren und/oder oberen Lenkwelle mit einem Stirnradgetriebe misst, vorgesehen, wobei die Drehmomentsensoreinheit einen drehfest mit der oberen oder unteren Lenkwelle verbunden Ringmagneten und einen mit der unteren oder oberen Lenkwelle verbunden Magnetflussleiter aufweist, und wobei ein Magnetsensor die Verdrehung der mit dem Ringmagneten verbunden Lenkwelle gegenüber der mit dem Magnetflussleiter verbundenen Lenkwelle detektiert, und wobei das Stirnradgetriebe ein erstes Zahnrad umfasst, welches mit einem Statorhalter verbunden ist, und wobei der Ringmagnet von einer Ringmagnethülse getragen ist, gekennzeichnet durch folgende Schritte:
- Bereitstellen der Ringmagnethülse und/oder des Statorhalters aus einem thermoplastischen Kunststoff,
- Positionieren der Ringmagnethülse und/oder des Statorhalters auf der oberen Lenkwelle oder der unteren Lenkwelle mit einem definierten Anpressdruck,
- Einleiten einer hochfrequenten mechanischen Schwingung im Ultraschallbereich in die obere oder untere Lenkwelle,
- Einpressen der oberen Lenkwelle in die Ringmagnethülse und/oder dem Statorhalter mit einem definierten Anpressdruck.

Vorzugsweise liegt die hochfrequente mechanische Schwingung in einem Bereich von 10 bis 40 kHz liegt, besonders bevorzug beträgt diese 20 kHz. In einer bevorzugten Ausführungsform weist die obere Lenkwelle und/oder die untere Lenkwelle auf einer Außenseite eine Rändelung auf und die durch die hochfrequente mechanische Schwingung plastifizierte Ringmagnethülse umfließt Hinterschneidungen der Rändelung, sodass nach dem Abkühlen eine form- und stoffschlüssige Verbindung zwischen der Ringmagnethülse und der oberen Lenkwelle oder der unteren Lenkwelle und/oder zwischen dem Statorhalter und der oberen Lenkwelle oder unteren entsteht.

Vorzugsweise wird während des Einleitens der hochfrequenten mechanischen Schwingung im Ultraschallbereich in die Lenkwelle, diese mit einer Halteklammer in Position gehalten.

Es ist vorteilhaft, wenn das Positionieren der Ringmagnethülse auf der Lenkwelle mittels eines Werkzeuges erfolgt, welches auf Vorsprünge an der Stirnseite der Ringmagnethülse aufgesetzt wird.

In einer Ausführungsform wird für das Einleiten der hochfrequenten mechanischen Schwingung eine Sonotrode an einer der Stirnseiten der oberen Lenkwelle oder an einer der Stirnseiten der unteren Lenkwelle platziert.

Bevorzugte Ausführungsformen der Erfindung werden nachfolgend anhand der Zeichnungen näher erläutert. Gleiche oder funktionsgleiche Bauteile sind dabei figurübergreifend mit denselben Bezugszeichen versehen. Es zeigen:
- Fig. 1:: eine räumliche Ansicht einer erfindungsgemäßen elektromechanischen Hilfskraftlenkung mit einem Elektromotor, einem Drehmomentsensor und einem Lenkwinkelsensor,
- Fig. 2:: eine Detailansicht der integralen Baueinheit des Drehmomentsensors und des Lenkwinkelsensors,
- Fig. 3:: eine Explosionsdarstellung der Anordnung der integralen Baueinheit auf der Lenkwelle,
- Fig. 4:: eine Explosionsdarstellung der integralen Baueinheit von einer ersten Seite,
- Fig. 5:: eine Explosionsdarstellung der integralen Baueinheit von einer zweiten Seite,
- Fig. 6:: eine Detailansicht eines auf der Lenkwelle platzierten Magnetflussleiters der integralen Baueinheit,
- Fig. 7:: eine Detailansicht des Magnetflussleiters und einer auf der Lenkwelle befestigten Ringmagnethülse,
- Fig. 8:: eine Explosionsdarstellung der Anordnung mit Magnetflussleiter, Ringmagnethülse und Lenkwelle,
- Fig. 9:: eine räumliche Ansicht der Lenkwelle mit Ringmagnethülse und Magnetflussleiter,
- Fig. 10:: eine Explosionsdarstellung des Magnetflussleiters mit Statorhalter und der oberen Lenkwelle,
- Fig. 11:: eine schematische Darstellung des Verfahrens zur Befestigung der Ringmagnethülse mit möglichen Positionen der Sonotrode.

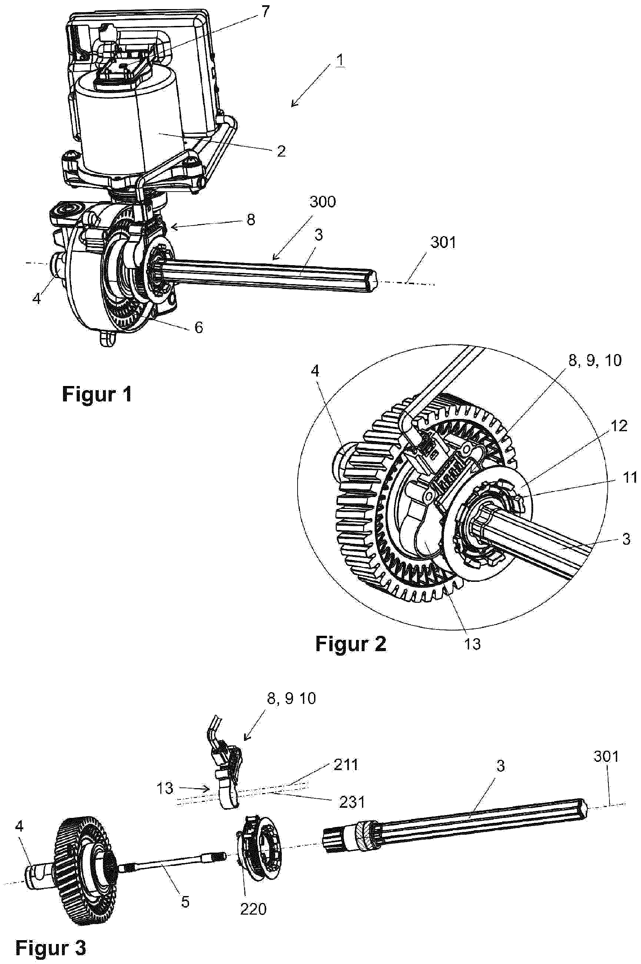

Die Figuren 1 bis 5 zeigen eine elektromechanische Hilfskraftlenkung 1 eines Kraftfahrzeuges mit einem Elektromotor 2, der an einer Lenksäule die Lenkbewegung eines Fahrers unterstützt. Zur Unterstützung ist ein Rotor des Elektromotors über ein Getriebe 6, im Beispiel ein Schneckenradgetriebe, in die Drehung der Lenkwelle 300 eingekoppelt. Die Lenkwelle 300 weist eine obere Lenkwelle 3 und eine untere Lenkwelle 4 auf, die über einen Drehstab 5 miteinander verbunden sind und um eine Lenkwellenachse 301 drehbar gelagert sind. Die obere und untere Lenkwelle können auch als obere und untere Welle oder als Lenkwelle bezeichnet werden. Die obere Lenkwelle 3 ist mit einem nicht dargestellten Lenkrad unmittelbar drehfest verbunden. Der Elektromotor 2 treibt über ein Getriebe 6 die untere Lenkwelle 4 an, die mit einem nicht dargestellten Zahnstangen-Lenkgetriebe verbunden ist. Der Elektromotor 2 weist einen Rotorlagesensor (RPS) 7 auf. Zudem ist eine integrale Baueinheit 8 mit einer Drehmomentsensoreinheit 9 und einer Lenkwinkelsensoreinheit 10 vorgesehen. Die Drehmomentsensoreinheit 9 erfasst die Verdrehung der oberen Lenkwelle 3 gegenüber der unteren Lenkwelle 4 als ein Maß des an der oberen Lenkwelle 3 manuell ausgeübten Drehmomentes. Die Lenkwinkelsensoreinheit 10 hingegen misst den aktuellen Lenkwinkel der unteren Lenkwelle 4.

Die Drehmomentsensoreinheit 9 weist einen drehfest mit der oberen Lenkwelle 3 verbundenen Ringmagneten 11 (Permanentmagneten) und Magnetflussleiter 12 auf. Eine dazugehörige Sensoreinheit 13 ist raumfest mit der Einheit des Elektromotors 2 verbunden.

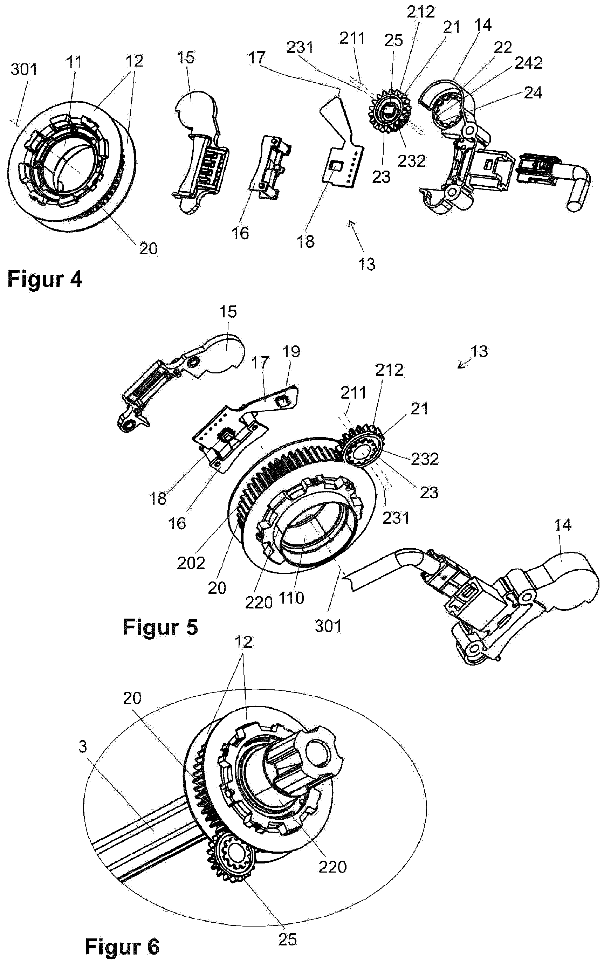

In den Figuren 4 und 5 ist der Aufbau der integralen Baueinheit 8 im Detail dargestellt. Die Sensoreinheit 13 weist ein Gehäuse 14 mit einem Gehäusedeckel 15 auf und darin angeordnet einen Magnetflussleiter 16 und einen auf einer Leiterplatte 17 angeordneten Magnetsensor 18. Die Flussleiter 12, 16 dienen zur Konzentrierung des magnetischen Flusses an dem Magnetsensor 18.

Der Magnetsensor 18 detektiert die Verdrehung der mit dem Ringmagneten 11 verbunden oberen Welle 3 gegenüber der mit einem der Magnetflussleiter 12 verbundenen unteren Welle 4.

Neben dem Magnetsensor 18 der Drehmomentsensoreinheit 9 ist auf der Leiterplatte 17 auch ein Sensorelement 19 der Lenkwinkelsensoreinheit 10 vorgesehen.

Der Ringmagnet 11 ist von einem ersten Zahnrad 20 mit einer nach außen gerichteten ersten Verzahnung 202 umfangseitig umgeben, das Teil der Lenkwinkelsensoreinheit 10 ist. Diese Verzahnung ist konzentrisch zur Lenkwellenachse 301 angeordnet. In diese erste Verzahnung 202 des ersten Zahnrades 20 greift eine zweite umlaufende nach außen gerichtete zweite Verzahnung 212 eines zweiten Zahnrades 21 ein, dass sich auf dem ersten Zahnrad 20 abwälzt und in einer Aufnahme des Gehäuses 14 drehbar um eine zweite Zahnradachse 211 gelagert ist. Die zweite Zahnradachse 211 ist parallel und versetzt zur Lenkwellenachse 301 angeordnet. In dem zweiten Zahnrad 21 wiederum ist ein drittes Zahnrad 23 drehbar um eine dritte Zahnradachse 231 drehbar exzentrisch geführt. Entsprechend ist die dritte Zahnradachse 231 zur zweiten Zahnradachse 211 und zur Lenkwellenachse 301 parallel und versetzt angeordnet. Das dritte Zahnrad 23 weist eine umlaufende nach außen gerichtete dritte Verzahnung 232 auf. Eine nach innen gerichtete umlaufende vierte Verzahnung 242 eines vierten Zahnrades 24 ist in der Aufnahme 22 im Gehäuse 14 angeordnet und steht in Eingriff mit der dritten Verzahnung 232, so dass diese dritte Verzahnung 232 entlang dieser vierten Verzahnung 242 abrollt. Die Zahnräder 20, 21, 23 bilden ein Stirnradgetriebe, wobei alle Drehachsen 301, 201, 211, 231 zueinander parallel und zueinander versetzt angeordnet sind.

Die Drehbewegung der oberen Lenkwelle 3 wird somit über das Getriebe auf das dritte Zahnrad 23 übertragen, in welchem ein Permanentmagnet, gebildet durch ein magnetisches Substrat 25, angeordnet ist. Die Rotation des dritten Zahnrades 23 wird dann mithilfe des Sensorelementes 19 auf der Leiterplatte 17 erfasst. Alternativ zum Einsatz eines separaten Permanentmagneten kann das magnetische Substrat 25 in das dritte Zahnrad 23 integriert sein oder sogar das gesamte dritte Zahnrad bilden.

Der Lenkwinkelsensor kann in diesem Ausführungsbeispiel einen Bereich von vier Umdrehungen der Lenkwelle, insbesondere der unteren Lenkwelle 4, eindeutig erfassen. Dazu ist ein Übersetzungsfaktor UF vom ersten Zahnrad, das heißt von der unteren Lenkwelle 4, zum Gebergetriebeelement von 4:1 vorgesehen. Während die untere Lenkwelle 4 vier Umdrehungen vollzieht, dreht sich das dritte Zahnrad Gebergetriebeelement des Stirnrädergetriebes nur ein einziges Mal. In der hier dargestellten Ausführungsform ist das die Getriebeübersetzung mit einem Zahn Unterschied zwischen der Innenverzahnung der Aufnahme und dem Gebergetriebeelement verwirklicht. Damit kann ein absoluter Drehwinkel der Drehlage der unteren Lenkwelle 4, auch über mehrere Umdrehungen der unteren Lenkwelle 4, bestimmt werden. Da die obere Lenkwelle 3 mit der unteren Lenkwelle 4 über den drehelastischen Drehstab 5 verbunden ist und nur geringe Verdrehwinkel zwischen den beiden Lenkwellen 3, 4 gegeneinander zugelassen werden, wird damit quasi auch die Drehlage der oberen Lenkwelle 3 bestimmt.

Der Ringmagnet 11 wird von einer Trägerhülse 110, der Ringmagnethülse, getragen. Mittels Spritzguss wird der Ringmagnet 11 umgossen und der Magnethalter oder die Ringmagnethülse 110 gefertigt. Die Ringmagnethülse 110 ist aus thermoplastischem Kunststoff gefertigt und kann mittels Ultraschallumformung zur Montage so umgeformt werden, dass sie an einem Befestigungsbereich der Lenkwelle in Axialrichtung und in Umfangsrichtung dauerhaft und spielfrei befestigt ist.

In der Figur 6 ist die Anordnung des Magnetflussleiters 12 auf der Lenkwelle 3 ohne Ringmagnet 11 dargestellt.

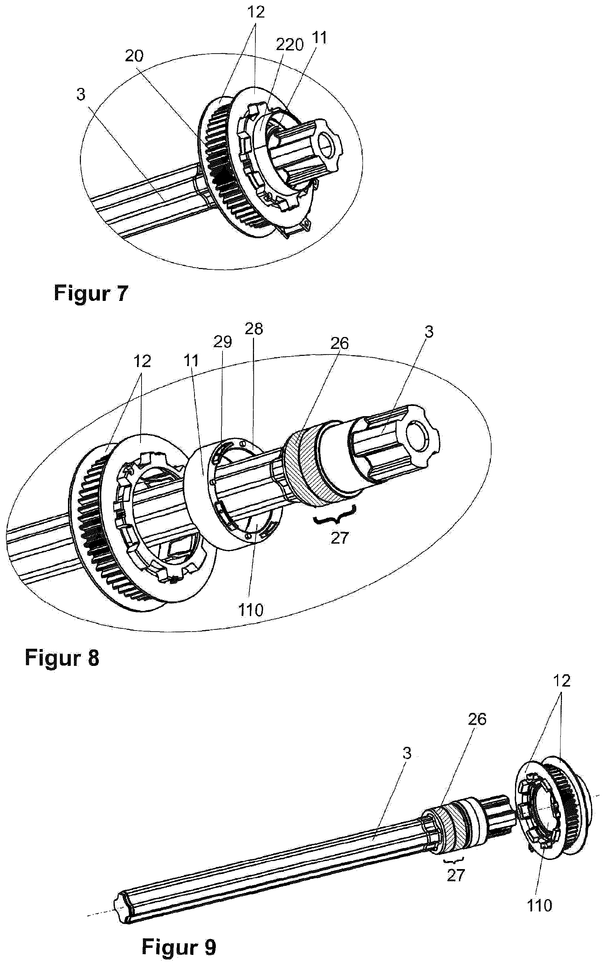

Figur 7 zeigt die Platzierung der Ringmagnethülse 110 auf der oberen Lenkwelle 3. Der Magnetflussleiter 12 umgibt mit seiner auf der von der nach außen gerichteten ersten Verzahnung 202 abgewandten Seite die Ringmagnethülse 110 oder umschließt die Ringmagnethülse 110. Der Ringmagnet 11 und die Ringmagnethülse 110 liegen im Wesentlichen rotationssymmetrisch zu einer Mittenachse.

Wie in Figur 8 dargestellt ist, weist die obere Lenkwelle 3 eine Rändelung 26 in einem Befestigungsbereich 27 auf, in welchem der Ringmagnete 11 oder die Ringmagnethülse 110 mittels Ultraschallschweissen miteinander verbunden werden. Die Rändelung 26 ist von der Oberfläche her in die obere Welle 3 eingebracht. Es kann auch eine andere zum Ultraschallschweißen geeignete Geometrie mit kleinen Verzahnungen oder Vorsprüngen vorgesehen sein.

Zur Befestigung der Ringmagnethülse 110 und/oder eines Statorhalters 220 auf der oberen Lenkwelle 3 werden Ultraschallwellen als mechanische Wechselschwingungen (ca. 20 kHz) dazu verwendet, das einzubettende Gewindeteil (Lenkwelle) aus Metall über eine Sonotrode in Schwingung zu versetzen. Durch die entstehende Grenzflächenreibung zwischen Metall und Kunststoff bei definiertem Anpressdruck wird der Kunststoff der Hülse an der Berührungsfläche erwärmt und dadurch plastisch, sodass die Lenkwelle unter Fortsetzung des Druckes in die Kunststoffhülse einsinken kann. Dabei umfließt die aufgeschmolzene Masse die Hinterschneidungen der Rändelung 26 oder Verzahnungen der oberen Lenkwelle 3 und verankert diese bei dem nachfolgenden Erstarrungsprozess. Die Ringmagnethülse 110 kann dabei axial und radial auf der oberen Lenkwelle 3 ausgerichtet werden.

Die Ringmagnethülse 110 weist an der Stirnseite 28 Vorsprünge 29 auf, die zur Befestigung eines Werkzeuges vorgesehen sind, das die Ringmagnethülse 110 fixiert, um ein Wegrutschen unter Schalleinwirkung zu vermeiden.

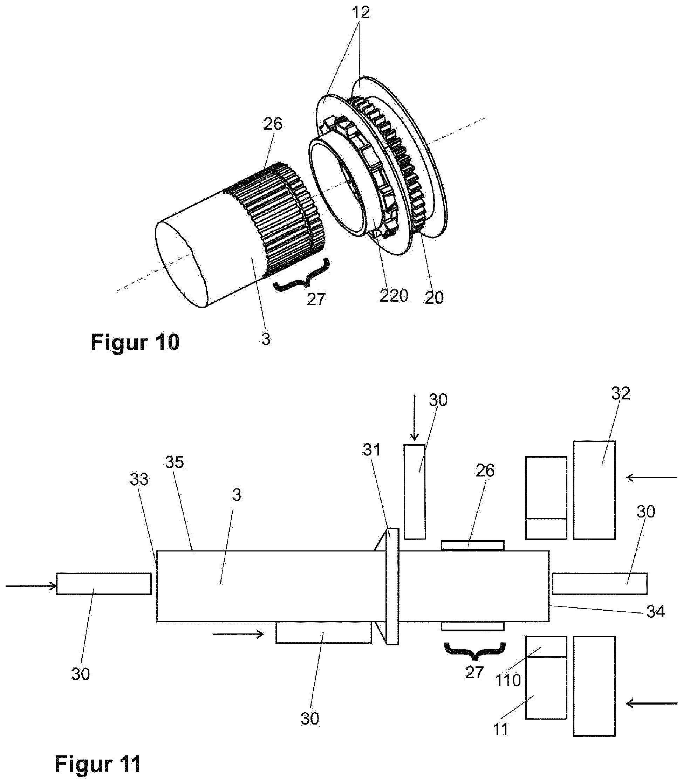

Figur 10 zeigt die obere Lenkwelle 3 und den einen Statorhalter 220, welcher von dem ersten Zahnrad 20 mit der nach außen gerichteten ersten Verzahnung 202 umfangseitig umgeben ist. Der Statorhalter ist aus einem thermoplastischen Kunststoff gefertigt und einstückig mit dem ersten Zahnrad 20 ausgebildet. Zur Befestigung des Statorhalters 220 auf der oberen Lenkwelle 3 umfliesst der Kunststoff des Statorhalters mittels der Ultraschallwellen die Hinterschneidungen der Rändelung 26 des Befestigungsbereichs 27 der oberen Lenkwelle 3 und bildet beim anschliessenden Erstarrungsprozess einen Formschluss zwischen Statorhalter und Lenkwelle 3. Durch die einteilige Ausbildung

Figur 11 veranschaulicht die Befestigung der Ringmagnethülse 110 auf der oberen Lenkwelle 3 durch Ultraschallumformung. Es sind vier unterschiedliche Varianten schematisch dargestellt, wie die Lenkwelle 3 mit dem Magneten 11 mittels einer Sonotrode 30 verbunden werden kann. Die obere Welle 3 wird mit einer Halteklammer 31 in Position gehalten. Die Ringmagnethülse 110 wird mit dem Ringmagnet 11 mittels eines Werkzeuges 32 auf die obere Welle 3 geschoben. Die Sonotrode 30 kann an einer der Stirnseiten 33,34 der Lenkwelle 3, 4platziert werden. Es ist auch möglich die Sonotrode 30 längs zur Lenkwelle 3, zwischen Halteklammer 31 und Befestigungsbereich 27 anzuordnen. Die Sonotrode 30 kann aber auch parallel zur Lenkwelle 3 zwischen Halteklammer 31 und dem befestigungsbereichfernen Ende 35 zum Einsatz kommen.

Die Befestigung des Ringmagnetes auf der oberen Lenkwelle mittels Ultraschallumformung ermöglicht ein schnelles, sauberes und spannungsarmes Einformen. Die Verwendung einer Kunststoffhülse ist zudem kostengünstig. Weiterhin wird der Aufpressprozess gespart und das Spritzgusswerkzeug zur Herstellung und der damit verbundene Prozess (kein Einlegen und Positionieren der Hülse erforderlich) vereinfacht.

## Patentansprüche

1. Elektromechanische Hilfskraftlenkung (1) für ein Kraftfahrzeug, umfassend
- eine Lenkwelle (300) die drehbar um eine Lenkwellendrehachse (301) gelagert ist und die eine obere Lenkwelle (3) und eine untere Lenkwelle (4) aufweist, die über einen Drehstab (5) miteinander verbunden sind,
- eine integrale Baueinheit (8), umfassend eine Sensoreinheit, die eine Drehmomentsensoreinheit (9), die die Verdrehung der oberen Lenkwelle (3) gegenüber der unteren Lenkwelle (4) erfasst, und/oder eine Lenkwinkelsensoreinheit (10), die den absoluten Lenkwinkel der unteren Lenkwelle (4) oder der oberen Lenkwelle (3) mit einem Stirnradgetriebe misst, umfasst,
wobei die Sensoreinheit einen drehfest mit der oberen Lenkwelle (3) oder unteren Lenkwelle (4) verbunden Ringmagneten (11) aufweist, und wobei ein magnetischer Sensor (18) die Verdrehung der mit dem Ringmagneten (11) verbundenen Lenkwelle detektiert, und wobei der Ringmagnet (11) von einem Teil in Form einer Ringmagnethülse (110) oder einem Statorhalter (220) getragen ist, wobei das Teil auf der oberen Lenkwelle (3) oder der unteren Lenkwelle (4) angeordnet ist,
**dadurch gekennzeichnet, dass** die Ringmagnethülse (110) und/oder der Statorhalter (220) aus einem thermoplastischen Kunststoff gefertigt und in einem Bereich zur Montage an der Lenkwelle mittels Ultraschallumformung in die Lenkwelle eingeformt ist.

2. Elektromechanische Hilfskraftlenkung nach Anspruch 1, **dadurch gekennzeichnet, dass** die obere Lenkwelle (3) und/oder die untere Lenkwelle (4) eine Rändelung (26) in einem Befestigungsbereich (27) mit der Ringmagnethülse (110) und/oder des Statorhalters (220) aufweist.

3. Elektromechanische Hilfskraftlenkung nach Anspruch 1 oder 2, **dadurch gekennzeichnet, dass** Ringmagnethülse (110) an einer Stirnseite (28) Vorsprünge (29) aufweist, die zur Befestigung eines Werkzeuges vorgesehen sind, das die Ringmagnethülse (110) fixiert, um ein Wegrutschen unter Schalleinwirkung zu vermeiden.

4. Elektromechanische Hilfskraftlenkung nach einem der vorhergehenden Ansprüche, **dadurch gekennzeichnet, dass** der Magnetflussleiter (12) die Ringmagnethülse (110) umschließt.

5. Elektromechanische Hilfskraftlenkung nach Anspruch 1, **dadurch gekennzeichnet, dass** das Stirnradgetriebe ein erstes Zahnrad (20) umfasst, dass den Ringmagnet (11) mit einer nach außen gerichteten ersten Verzahnung (202) umfangseitig umgibt und ein zweites Zahnrad (21), das um eine zweite Zahnradachse (211) drehbar gelagert ist, mit einer um die zweite Zahnradachse (211) umlaufenden nach außen gerichteten zweiten Verzahnung (212), wobei die zweite Zahnradachse (211) parallel und beabstandet zur Lenkwellendrehachse (301) angeordnet ist und die erste Verzahnung (202) und die zweite Verzahnung (212) in Eingriff miteinander stehen.

6. Elektromechanische Hilfskraftlenkung nach Anspruch 5, **dadurch gekennzeichnet, dass** das erste Zahnrad (20) mit der nach aussen gerichteten ersten Verzahnung (202) einstückig mit dem Statorhalter (220) ausgebildet ist.

7. Elektromechanische Hilfskraftlenkung nach Anspruch 5, **dadurch gekennzeichnet,** ein drittes Zahnrad (23) vorgesehen ist, das um eine dritte Zahnradachse (231) drehbar gelagert ist, mit einer nach außen gerichteten um die dritte Zahnradachse (231) umlaufenden dritten Verzahnung (232), wobei die dritte Zahnradachse (231) parallel und beabstandet zur Lenkwellendrehachse (301) und parallel beabstandet zur zweiten Zahnradachse (211) angeordnet ist.

8. Elektromechanische Hilfskraftlenkung nach Anspruch 7, **dadurch gekennzeichnet, dass** ein magnetisches Substrat (25) vorgesehen ist, das mit dem dritten Zahnrad (23) drehfest verbunden ist oder integral das dritte Zahnrad (23) bildet, wobei dessen Drehlage durch ein Sensorelement (19) abtastbar ist.

9. Elektromechanische Hilfskraftlenkung nach Anspruch 8, **dadurch gekennzeichnet,** ein viertes Zahnrad (24) vorgesehen ist, dass eine nach innen gerichtete um die zweite Zahnradachse (211) und dritte Zahnradachse (231) umlaufende vierte Verzahnung (242) aufweist, die mit der dritten Verzahnung (232) in Eingriff steht.

10. Verfahren zur Montage einer integralen Baueinheit (8) in einer elektromechanischen Hilfskraftlenkung (1) für ein Kraftfahrzeug, umfassend
- eine Lenkwelle (300) die drehbar um eine Lenkwellendrehachse (301) gelagert ist und die eine obere Lenkwelle (3) und eine untere Lenkwelle (4) aufweist, die über einen Drehstab (5) miteinander verbunden sind,
- wobei die integrale Baueinheit (8) eine Sensoreinheit, die eine Drehmomentsensoreinheit (9), die die Verdrehung der oberen Lenkwelle (3) gegenüber der unteren Lenkwelle (4) erfasst, und/oder eine Lenkwinkelsensoreinheit (10), die den absoluten Lenkwinkel der unteren Lenkwelle (4) oder der oberen Lenkwelle (3) mit einem Stirnradgetriebe misst, umfasst,
wobei die Sensoreinheit einen drehfest mit der oberen Lenkwelle (3) oder der unteren Lenkwelle (4) verbunden Ringmagneten (11) aufweist, und wobei ein magnetischer Sensor (18) die Verdrehung der mit dem Ringmagneten (11) verbundenen Lenkwelle detektiert, und wobei der Ringmagnet (11) von einem Teil in Form einer Ringmagnethülse (110) oder einem Statorhalter (220) getragen ist, wobei das Teil auf der oberen Lenkwelle (3) oder der unteren Lenkwelle (4) angeordnet ist,
**gekennzeichnet durch** folgende Schritte:
- Bereitstellen der Ringmagnethülse (110) und/oder des Statorhalters (220) aus einem thermoplastischen Kunststoff,
- Positionieren der Ringmagnethülse (110) und/oder des Statorhalters (220)auf der oberen Lenkwelle (3) oder der unteren Lenkwelle (4) mit einem definierten Anpressdruck,
- Einleiten einer hochfrequenten mechanischen Schwingung im Ultraschallbereich in die entsprechendeLenkwelle,
- Einpressen der entsprechendenLenkwelle in die Ringmagnethülse (110) und/oder dem Statorhalter (220) mit einem definierten Anpressdruck.

11. Verfahren nach Anspruch 10, **dadurch gekennzeichnet, dass** die hochfrequente mechanische Schwingung in einem Bereich von 10kHz bis 40kHz liegt.

12. Verfahren nach Anspruch 10 oder 11, **dadurch gekennzeichnet, dass** die obere Lenkwelle (3) und/oder die untere Lenkwelle (4) auf einer Außenseite eine Rändelung (26) aufweist und dass die durch die hochfrequente mechanische Schwingung plastifizierte Ringmagnethülse (110) und/oder der Statorhalter Hinterschneidungen der Rändelung (26) umfließt, sodass nach dem Abkühlen eine form- und stoffschlüssige Verbindung zwischen der Ringmagnethülse (110) und der oberen Lenkwelle (3) oder der unteren Lenkwelle (4) und/oder zwischen dem Statorhalter (220) und der oberen Lenkwelle (3) oder der unteren Lenkwelle (4) entsteht.

13. Verfahren nach einem der vorhergehenden Ansprüche 10 bis 12, **dadurch gekennzeichnet, dass** während des Einleitens der hochfrequenten mechanischen Schwingung im Ultraschallbereich in die Lenkwelle, diese mit einer Halteklammer (31) in Position gehalten wird.

14. Verfahren nach einem der vorhergehenden Ansprüche 10 bis 13, **dadurch gekennzeichnet, dass** das Positionieren der Ringmagnethülse (110) auf der Lenkwelle mittels eines Werkzeuges (32) erfolgt, das auf Vorsprünge (29) an der Stirnseite (28) der Ringmagnethülse (110) aufgesetzt wird.

15. Verfahren nach einem der vorhergehenden Ansprüche 10 bis 14, **dadurch gekennzeichnet, dass** die für das Einleiten der hochfrequenten mechanischen Schwingung eine Sonotrode (30) an einer der Stirnseiten der oberen Lenkwelle (33, 34) oder der Stirnseite der unteren Lenkwelle platziert wird.

## Claims

1. An electromechanical power steering (1) for a motor vehicle, comprising
- a steering shaft (300) which is mounted able to rotate about a steering shaft axis of rotation (301) and which comprises an upper steering shaft (3) and a lower steering shaft (4), which are joined together by a torsion bar (5)
- an integral component (8) having a sensor unit, comprising a torque sensor unit (9), which detects the rotation of the upper steering shaft (3) relative to the lower steering shaft (4), and/or a steering angle sensor unit (10), which measures the absolute steering angle of the lower steering shaft (4) or the upper steering shaft (3) with a spur gearing,
wherein the sensor unit comprises a ring magnet (11) rotationally fixed to the upper steering shaft (3) or lower steering shaft (4), and wherein a magnetic sensor (18) detects the rotation of the steering shaft connected to the ring magnet (11), and wherein the ring magnet (11) is carried by a part in the shape of a ring magnet sleeve (110) or a stator holder (220), the part being arranged on the upper steering shaft (3) or the lower steering shaft (4),
**characterized in that** the ring magnet sleeve (110) and/or the stator holder (220) is made from a thermoplastic material and is molded by means of ultrasound forming in the steering shaft in one region for mounting on the steering shaft.

2. The electromechanical power steering as claimed in claim 1, **characterized in that** the upper steering shaft (3) and/or the lower steering shaft (4) comprises a knurling (26) in a fastening region (27) with the ring magnet sleeve (110) and/or the stator holder (220).

3. The electromechanical power steering as claimed in claim 1 or 2, **characterized in that** the ring magnet sleeve (110) comprises protrusions (29) on one end face (28), which are provided for the fastening of a tool, which secures the ring magnet sleeve (110) in order to prevent a slippage during the sonic action.

4. The electromechanical power steering as claimed in one of the preceding claims, **characterized in that** the magnetic flux guide (12) encloses the ring magnet sleeve (110).

5. The electromechanical power steering as claimed in claim 1, **characterized in that** the spur gearing comprises a first gear (20), which surrounds the ring magnet (11) at the circumference with an outwardly directed first toothing (202), and a second gear (21), which is mounted able to turn about a second gear axis (211), having an outwardly directed second toothing (212) encircling the second gear axis (211), wherein the second gear axis (211) is situated parallel to and spaced apart from the steering shaft axis of rotation (301) and the first toothing (202) and the second toothing (212) are intermeshed with each other.

6. The electromechanical power steering as claimed in claim 5, **characterized in that** the first gear (20) with the outwardly directed first toothing (202) is fashioned as a single piece with the stator holder (220).

7. The electromechanical power steering as claimed in claim 5, **characterized in that** a third gear (23) is provided, which is mounted able to turn about a third gear axis (231), having an outwardly directed third toothing (232) encircling the third gear axis (231), wherein the third gear axis (231) is situated parallel to and spaced apart from the steering shaft axis of rotation (301) and parallel to and spaced apart from the second gear axis (211).

8. The electromechanical power steering as claimed in claim 7, **characterized in that** a magnetic substrate (25) is provided, which is joined rotationally fixed to the third gear (23) or integrally forms the third gear (23), and its rotational position can be sensed by a sensor element (19).

9. The electromechanical power steering as claimed in claim 8, **characterized in that** a fourth gear (24) is provided, comprising an inwardly directed fourth toothing (242) encircling the second gear axis (211) and third gear axis (231), and meshing with the third toothing (232).

10. A method for mounting an integral component (8) in an electromechanical power steering (1) for a motor vehicle, comprising
- a steering shaft (300) which is mounted able to rotate about a steering shaft axis of rotation (301) and which comprises an upper steering shaft (3) and a lower steering shaft (4), which are joined together by a torsion bar (5),
- wherein the integral component (8) has a sensor unit, comprising a torque sensor unit (9), which detects the rotation of the upper steering shaft (3) relative to the lower steering shaft (4), and/or a steering angle sensor unit (10), which measures the absolute steering angle of the lower steering shaft (4) or the upper steering shaft (3) with a spur gearing,
wherein the sensor unit comprises a ring magnet (11) rotationally fixed to the upper steering shaft (3) or lower steering shaft (4), and wherein a magnetic sensor (18) detects the rotation of the steering shaft connected to the ring magnet (11), and wherein the ring magnet (11) is carried by a part in the shape of a ring magnet sleeve (110) or a stator holder (220), the part being arranged on the upper steering shaft (3) or the lower steering shaft (4),
**characterized by** the following steps:
- providing the ring magnet sleeve (110) and/or the stator holder (220) made of a thermoplastic material,
- positioning of the ring magnet sleeve (110) and/or the stator holder (220) on the upper steering shaft (3) or the lower steering shaft (4) with a defined contact pressure,
- introducing a high-frequency mechanical vibration in the ultrasound range into the corresponding steering shaft,
- pressing the corresponding steering shaft into the ring magnet sleeve (110) and/or the stator holder (220) with a defined contact pressure.

11. The method as claimed in claim 10, **characterized in that** the high-frequency mechanical vibration lies in a range of 10 kHz to 40 kHz.

12. The method as claimed in claim 10 or 11, **characterized in that** the upper steering shaft (3) and/or the lower steering shaft (4) comprises a knurling (26) on an outer side and **in that** the ring magnet sleeve (110) and/or the stator holder plasticized by the high-frequency mechanical vibration flows around undercuts of the knurling (26), so that after the cooldown a form fitting and integrally bonded connection is produced between the ring magnet sleeve (110) and the upper steering shaft (3) or the lower steering shaft (4) and/or between the stator holder (220) and the upper steering shaft (3) or the lower steering shaft (4).

13. The method as claimed in one of the preceding claims 10 to 12, **characterized in that** during the introducing of the high-frequency mechanical vibration in the ultrasound range into the steering shaft the latter is held in position with a holding clamp (31).

14. The method as claimed in one of the preceding claims 10 to 13, **characterized in that** the positioning of the ring magnet sleeve (110) on the steering shaft is done by means of a tool (32) which is placed on protrusions (29) at the end face (28) of the ring magnet sleeve (110).

15. The method as claimed in one of the preceding claims 10 to 14, **characterized in that** a sonotrode (30) is placed on one of the end faces of the upper steering shaft (33, 34) or the end face of the lower steering shaft for the introducing of the high-frequency mechanical vibration.

## Revendications

1. Direction assistée électromécanique (1) destinée à un véhicule automobile, ladite direction comprenant
- un arbre de direction (300) qui est monté de manière à pouvoir tourner sur un axe de rotation d'arbre de direction (301) et qui comporte un arbre de direction supérieur (3) et un arbre de direction inférieur (4) qui sont reliés l'un à l'autre par une barre rotative (5),
- une unité structurelle intégrée (8) comprenant une unité de détection qui comporte une unité de détection de couple (9) qui détecte la rotation de l'arbre de direction supérieur (3) par rapport à l'arbre de direction inférieur (4) et/ou une unité de détection d'angle de braquage (10) qui mesure l'angle de braquage absolu de l'arbre de direction inférieur (4) ou de l'arbre de direction supérieur (3) avec un engrenage droit,
l'unité de détection comportant un aimant annulaire (11) relié solidairement en rotation à l'arbre de direction supérieur (3) ou à l'arbre de direction inférieur (4), et un capteur magnétique (18) détectant la rotation de l'arbre de direction relié à l'aimant annulaire (11), et l'aimant annulaire (11) étant porté par une pièce en forme de manchon d'aimant annulaire (110) ou d'un support de stator (220), la pièce étant disposée sur l'arbre de direction supérieur (3) ou sur l'arbre de direction inférieur (4),
**caractérisée en ce que** le manchon d'aimant annulaire (110) et/ou le support de stator (220) sont fabriqués à partir d'une matière thermoplastique et sont formés dans une zone de montage sur l'arbre de direction par transformation en l'arbre de direction par ultrasons.

2. Direction assistée électromécanique selon la revendication 1, **caractérisée en ce que** l'arbre de direction supérieur (3) et/ou l'arbre de direction inférieur (4) comporte un moletage (26) dans une zone de fixation (27) avec le manchon d'aimant annulaire (110) et/ou le support de stator (220).

3. Direction assistée électromécanique selon la revendication 1 ou 2, **caractérisée en ce que** le manchon d'aimant annulaire (110) comporte sur un côté frontal (28) des saillies (29) qui sont prévues pour la fixation d'un outil qui fixe le manchon d'aimant annulaire (110) pour l'empêcher de s'échapper par glissement sous l'action des ondes acoustiques.

4. Direction assistée électromécanique selon l'une des revendications précédentes, **caractérisée en ce que** le conducteur de flux magnétique (12) entoure le manchon d'aimant annulaire (110).

5. Direction assistée électromécanique selon la revendication 1, **caractérisée en ce que** l'engrenage droit comprend un premier pignon (20) qui entoure périphériquement l'aimant annulaire (11) avec une première denture (202) orientée vers l'extérieur et un deuxième pignon (21) est monté de manière à pouvoir tourner sur le deuxième axe de pignon (211), avec une deuxième denture (212) dirigée vers l'extérieur et s'étendant autour du deuxième axe de pignon (211), le deuxième axe de pignon (211) étant disposé parallèlement à distance de l'axe de rotation d'arbre de direction (301) et la première denture (202) et la deuxième denture (212) s'engrenant l'une avec l'autre.

6. Direction assistée électromécanique selon la revendication 5, **caractérisée en ce que** le premier pignon (20) pourvu de la première denture (202) dirigée vers l'extérieur est formé d'une seule pièce avec le support de stator (220).

7. Direction assistée électromécanique selon la revendication 5, **caractérisée en ce qu'**un troisième pignon (23) est prévu qui est monté de manière à pouvoir tourner sur un troisième axe de pignon (231), avec une troisième denture (232) dirigée vers l'extérieur et s'étend autour du troisième axe de pignon (231), le troisième axe de pignon (231) étant disposé parallèlement à distance de l'axe de rotation d'arbre de direction (301) et parallèlement à distance du deuxième axe de pignon (211).

8. Direction assistée électromécanique selon la revendication 7, **caractérisée en ce qu'**un substrat magnétique (25) est prévu qui est relié solidairement en rotation au troisième pignon (23) ou forme intégralement le troisième pignon (23), la position de rotation pouvant être détectée par un élément de détection (19).

9. Direction assistée électromécanique selon la revendication 8, **caractérisée en ce qu'**un quatrième pignon (24) est prévu qui comporte une quatrième denture (242) qui est dirigée vers l'intérieur et s'étend autour du deuxième axe de pignon (211) et du troisième axe de pignon (231) et qui s'engrène avec la troisième denture (232).

10. Procédé de montage d'une unité intégrale (8) dans une direction assistée électromécanique (1) destinée à un véhicule automobile, ladite direction comprenant
- un arbre de direction (300) qui est monté de manière à pouvoir tourner sur un axe de rotation d'arbre de direction (301) et qui comporte un arbre de direction supérieur (3) et un arbre de direction inférieur (4) qui sont reliés l'un à l'autre par une barre rotative (5),
- une unité structurelle intégrée (8) comprenant une unité de détection qui comporte une unité de détection de couple (9) qui détecte la rotation de l'arbre de direction supérieur (3) par rapport à l'arbre de direction inférieur (4) et/ou une unité de détection d'angle de braquage (10) qui mesure l'angle de braquage absolu de l'arbre de direction inférieur (4) ou de l'arbre de direction supérieur (3) avec un engrenage droit,
l'unité de détection comportant un aimant annulaire (11) relié solidairement en rotation à l'arbre de direction supérieur (3) ou à l'arbre de direction inférieur (4), et un capteur magnétique (18) détectant la rotation de l'arbre de direction relié à l'aimant annulaire (11), et l'aimant annulaire (11) étant porté par une pièce en forme de manchon d'aimant annulaire (110) ou d'un support de stator (220), la pièce étant disposée sur l'arbre de direction supérieur (3) ou sur l'arbre de direction inférieur (4),
**caractérisé par** les étapes suivantes :
- fournir le manchon d'aimant annulaire (110) et/ou le support de stator (220) en matière thermoplastique,
- positionner le manchon d'aimant annulaire (110) et/ou le support de stator (220) sur l'arbre de direction supérieur (3) ou l'arbre de direction inférieur (4) avec une pression de contact définie,
- injecter dans l'arbre de direction correspondant une vibration mécanique à haute fréquence dans le domaine des ultrasons,
- enfoncer l'arbre de direction correspondant dans le manchon d'aimant annulaire (110) et/ou le support de stator (220) avec une pression de contact définie.

11. Procédé selon la revendication 10, **caractérisé en ce que** la vibration mécanique à haute fréquence est dans une plage de 10 kHz à 40 kHz.

12. Procédé selon la revendication 10 ou 11, **caractérisé en ce que** l'arbre de direction supérieur (3) et/ou l'arbre de direction inférieur (4) comporte sur un extérieur un moletage (26) et **en ce que** le manchon d'aimant annulaire (110) plastifié par la vibration mécanique à haute fréquence et/ou le support de stator s'écoule autour des contre-dépouilles de la molette (26) de manière à générer, après refroidissement, une liaison de matière et par complémentarité de formes entre le manchon d'aimant annulaire (110) et l'arbre de direction supérieur (3) ou l'arbre de direction inférieur (4) et/ou entre le support de stator (220) et l'arbre de direction supérieur (3) ou l'arbre de direction inférieur (4).

13. Procédé selon l'une des revendications précédentes 10 à 12, **caractérisé en ce que** lors de l'injection de la vibration mécanique à haute fréquence dans le domaine des ultrasons dans l'arbre de direction, celui-ci est maintenu en position par une bride de retenue (31) .

14. Procédé selon l'une des revendications 10 à 13 précédentes, **caractérisé en ce que** le positionnement du manchon d'aimant annulaire (110) sur l'arbre de direction est effectué au moyen d'un outil (32) qui est placé sur des saillies (29) sur le côté frontal (28) du manchon d'aimant annulaire (110).

15. Procédé selon l'une des revendications précédentes 10 à 14, **caractérisé en ce qu'**une sonotrode (30) destinée à injecter la vibration mécanique à haute fréquence est placée sur l'un parmi les côtés frontaux de l'arbre de direction supérieur (33, 34) ou le côté frontal de l'arbre de direction inférieur.
